# EUROPÄISCHE PATENTSCHRIFT

(11) **EP 1 046 091 B1**
(45) Veröffentlichungstag und Bekanntmachung des Hinweises auf die Patenterteilung: **10.08.2005**
(21) Anmeldenummer: 99936326.0
(22) Anmeldetag: 26.05.1999
(51) Int. Cl.: G05D 16/20

(54) **VORRICHTUNG ZUR DRUCKNIVEAUÜBERWACHUNG**
PRESSURE LEVEL CONTROL DEVICE
DISPOSITIF DE CONTROLE DE NIVEAU DE PRESSION

(30) Priorität: 22.09.1998 DE 19843347
(43) Veröffentlichungstag der Anmeldung: 25.10.2000
(73) Patentinhaber: ROBERT BOSCH GMBH, 70442 Stuttgart (DE)
(72) Erfinder: PAESSLER, Wolfgang, D-77833 Ottersweiher (DE); BAUER, Bertram, D-76571 Gaggenau (DE)
(86) Internationale Anmeldenummer: PCT/DE1999/001554
(87) Internationale Veröffentlichungsnummer: WO 2000/017723

(56) Entgegenhaltungen:
- DE-A- 4 342 587
- US-A- 4 140 436
- US-A- 4 247 260
- US-A- 4 754 732
- US-A- 4 948 931

## Beschreibung

### Stand der Technik

Die Erfindung betrifft eine Vorrichtung zur Druckniveauüberwachung nach dem Oberbegriff des Hauptanspruchs.

Solche Vorrichtungen zur Druckniveauüberwachung finden ihre Anwendung üblicherweise auf hydraulischem oder pneumatischem Gebiet, wo sie beispielsweise in Steuer- und Schalteinheiten eingesetzt werden. Sie werden insbesondere auch im Kraftfahrzeugbereich zur Reifendrucküberwachung, in Brems- und Einspritzanlagen, bei der Türverriegelung sowie der Sitzanpassung benutzt.

Die wesentlichen Bauteile von bekannten Vorrichtungen zur Druckniveauüberwachung sind Druckschalter, die zusammen mit Rückschlagventilen die Drucküberwachung ermöglichen. Die Druckschalter sind so konzipiert, daß mittels Über- oder Unterdruck auf eine mit einer Schalteinheit verbundenen Membran bestimmte Funktionen druckabhängig geschaltet werden können. Das schaltende Stellelement bewegt sich dabei je nach Über- bzw. Unterdruck in entgegengesetzte Richtungen und schaltet unterschiedliche elektrische Kontakte.

Zur reinen Druckniveauüberwachung ist das Schalten in Abhängigkeit von Über- und Unterdruck nicht nötig, d.h. es ist völlig ausreichend, wenn nur ein elektrischer Kontakt geschaltet wird. Die Verwendung herkömmlicher Druckschalter zieht somit einen unnötig hohen Materialaufwand nach sich.

Bei herkömmlichen Druckschaltern sind außerdem die Rückschlagventile nicht explizit Teil der Schalter, sondern sie sind separat auf einem mit den Schaltern in Verbindung stehendem Bauteil, beispielsweise einer Grundplatte oder einem Steuerblock angeordnet.

Aus der US 4,754,732 ist ein Sensor zur Überwachung des Ölstandes in einem Ölsumpf eines Verbrennungsmotors bekannt, der als Druckschalter mit integriertem Ventil ausgelegt ist. Über schlauchartige Verbindungsmittel ist der Ölsumpf eines Verbrennungsmotors mit dem Einlasskanal der Sensorvorrichtung verbunden. Bei hinreichendem Ölstand im Ölsumpf tauchen die Verbindungsmittel soweit in das Öl ein, dass der Eingangskanal der Sensorvorrichtung gegenüber der umgebenden Luft abgedichtet ist. Fällt das Ölniveau im Ölsumpf unter ein vorgegebenes Niveau, so wird das ölsumpfseitige Ende der Verbindungsmittel mit pneumatischen Druckimpulsen aufgrund der Drehbewegung der Kurbelwelle des Verbrennungsmotors zyklisch beaufschlagt. Diese Druckimpulse werden über die Verbindungsmittel, den Einlasskanal und ein Ventil in das Gehäuse der Sensorvorrichtung geleitet.

Im Innenraum der Sensorvorrichtung befindet sich eine Schaltmembran, die den Innenraum der Vorrichtung in zwei Teilräume, einen Anregungsraum sowie einen Referenz- und Schaltraum unterteilt. Der Innenraum der Sensorvorrichtung ist über ein Rückschlagventil gegenüber dem Einlasskanal der Sensorvorrichtung im Wesentlichen abgedichtet. Im Takt der pulsierenden Druckstöße wird nun Luft durch den Einlasskanal und über das Ventil in den Innenraum des Gehäuses der Sensorvorrichtung gepumpt. Der Teilraum des Gehäuseinnenraumes, der zur Aktivierung der Menbran dient wird so sukzessive mit Druck beaufschlagt. Übersteigt der Druck im Anregungs-Teilraum die Druckverhältnisse im Referenz-Teilraum des Gehäuses, so wird die Trennungsmembran zwischen den beiden Teilräumen des Sensorgehäuses angehoben und betätigt dabei ein Schaltelement im Referenz- beziehungsweise Schaltraum, welches ein elektrisches Signal erzeugt das beispielsweise dazu genutzt werden kann, eine Warnlampe zu aktivieren, die einen potentiellen Anwender über den gesunkenen Ölstand im Ölsumpf informiert.

Die Vorrichtung der US 4,754,732 zeigt somit einem Druckschalter, der aktiviert wird, wenn das Ölniveau in einem Ölsumpf eines Verbrennungsmotors unter einen einstellbaren Grenzwert abfällt.

Dokument DE 4 342 587 offenbart weiterhin eine Anordnung mit einem Rüchschlagventil und einem Druckschalter. Das Gehäuse des Druckschalters ist in eine Gewindebohrung einer Einstellschraube des Rückschlagventils eingeschraubt. Der Druckschalter weist ein zweiteiliges Gehäuse und eine Membran, die das Gehäuse in zwei Raüme, teilt, auf.

Aus der US-A-4,247,260 ist eine druckgeregelte Wasserversorgungsanlage bekannt, bei der zwischen einer Zuleitung und einer zum Verbraucher führenden Entnahmeleitung ein Druckspeicher angeordnet ist. Zwischen der mit einer Förderpumpe verbundenen Zuleitung und dem Druckspeicher ist eine Membran vorgesehen, die einen Druckschalter steuert, der die Förderpumpe ein- bzw. ausschaltet. Um eine kompakte Ausführungsform der Anlagenkeile dieser Wasserversorgungsanlage zu erreichen, wird in der US-A-4,247,260 vorgeschlagen, die Membran direkt im Förderstrom des Wassers anzuordnen und mit einer Durchlassöffnung zu versehen. Die Größe der Durchlassöffnung wird dabei in Bezug auf die Förderleistung der Pumpe so bemessen, dass an ihr eine Druckdifferenz entsteht. Ferner wird auf der dem Druckspeicher zugekehrten Seite der Membran über der Durchlassöffnung ein Rückschlagventil angeordnet, so dass die Membran selbst den Sitz für das Rückschlagventil bildet. Über der Membranoberfläche ist weiterhin die Mündung einer zum Druckschalter führenden Leitung angeordnet. Der Abstand der Mündung der Leitung zur Membranoberfläche ist dabei so gewählt, dass die Membran beim Auslenken in Folge einer Druckdifferenz an der Mündung der Leitung anliegt und diese verschließt. Druckgeregelte Wasserversorgungsanlagen der beschriebenen Art werden zur Versorgung von Anwesen verwendet, die an kein öffentliches Wasserversorgungsnetz angeschlossen sind.

Der Anwendungsbereich herkömmlicher Vorrichtungen zur Druckniveauüberwachung ist stark eingeschränkt, da gewünschte, weitergehende Funktionen nur zusammen mit zusätzlichen, speziellen Bauteilen realisierbar sind. Außerdem erfordert dies einen relative hohen Kosten- und Materialaufwand, der darüber hinaus zusätzlich die Montage der zur Druckniveauüberwachung eingesetzten Schalter erschwert.

### Vorteile der Erfindung

Die erfindungsgemäße Vorrichtung mit den Merkmalen des unabhängigen Anspruchs hat den Vorteil, dass herkömmliche Druckschalter bei gleichzeitiger Reduzierung der Bauteile und folglich auch der Montageschritte eine zusätzliche Funktion erhalten, die ihnen unabhängig von einem speziellen Bauteil ermöglicht, ein bestimmtes Druckniveau zu überwachen und einzuhalten. Dies wird durch die Integration des mit dem Gehäuseinnenraum in Verbindung stehenden Rückschlagventils in das Gehäuseunterteil ermöglicht.

Darüber hinaus erreicht man durch die zweiteilige Ausführung des Gehäuses mit einem Gehäuseoberteil und einem Gehäuseunterteil eine sehr kompakte Bauweise

Durch die in den Unteransprüchen aufgeführten Merkmale sind vorteilhafte Weiterbildungen der erfindungsgemäßen Vorrichtung nach dem Hauptanspruch möglich.

Das in das Gehäuseunterteil integrierte Rückschlagventil weist eine zweite Membran mit einer zentralen Öffnung und ein die zweite Membran fixierendes Haltemittel auf. Es ist weiterhin mit mindestens je einem Einlaßstutzen sowie einem Auslaßstutzen verbunden. Damit wird erreicht, daß der für eine spezielle Aufgabenstellung eingesetzte Druckschalter universell verwendet und zur Druckniveauüberwachung auch in anderen technischen Bereichen eingesetzt werden kann.

Wenn die zweite Membran an ihrem Randbereich durch das Haltemittel auf einer Schulter im Inneren des Gehäuseunterteils gehalten wird, dann wird sie bezüglich ihrer Lage im Gehäuseunterteil fixiert und kann ihre Lage dort auch unter Druckeinwirkung nicht verändern. Besteht sie darüberhinaus aus einem elastischen Material, dann wird sich unter Druckeinwirkung lediglich ihr zentraler Bereich verformen. Im nicht deformierten Zustand liegt ihr zentraler Bereich auf einer Dichtfläche auf, die an einem im Inneren des Gehäuseunterteils gebildeten Dichtsitz angeformt ist.

Damit diese Ventilanordnung als Rückschlagventil wirken kann, trennt die zweite Membran den mit einem Fluid unter Druck beaufschlagbaren Gehäuseinnenraum in drei verschiedene Teilräume. Auf diese Weise entsteht ein äußerst kompakter Aufbau, der es erlaubt, die Rückschlags- und Überwachungsfunktion auf engem Raum benachbart und unter Ausnutzung gleicher Bauteile zur Verfügung zu stellen.

Dabei wird der erste Teilraum im wesentlichen begrenzt durch die erste Membran und die zweite Membran, der zweite Teilraum durch eine den Einlaßstutzen aufnehmende äußere Wand und die Außenfläche des Dichtsitzes zusammen mit der zweiten Membran, und der dritte Teilraum durch die Innenfläche des Dichtsitzes zusammen mit der zweiten Membran.

Damit wird verhindert, daß Überdruck aus dem ersten und dritten Teilraum in den zweiten Teilraum entweicht. Gleichzeitig wird aber ermöglicht, daß Überdruck aus dem zweiten Teilraum in den ersten und dritten Teilraum gelangen kann. Somit wird die klassische Rückschlagfunktion realisiert.

### Zeichnung

In der Zeichnung ist ein Ausführungsbeispiel einer erfindungsgemäßen Vorrichtung dargestellt und in der nachfolgenden Beschreibung näher erläutert.

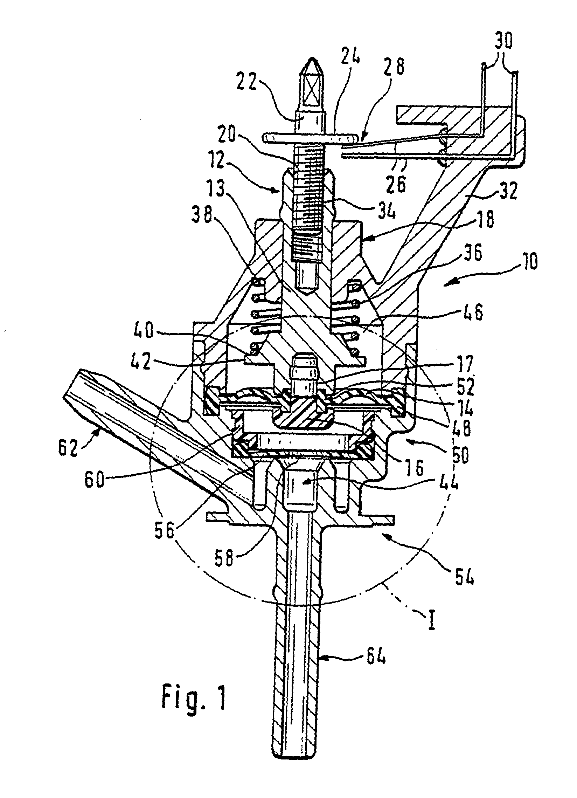

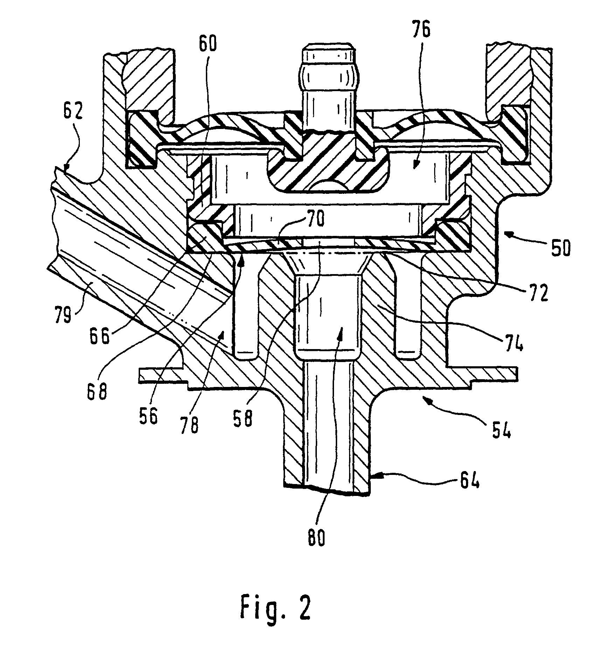

Es zeigen Figur 1 einen Schnitt durch das Ausführungsbeispiel und Figur 2 eine vergrößerte Darstellung des Bereiches I in Figur 1.

### Beschreibung des Ausführungsbeispiels

Das in Figur 1 dargestellte Ausführungsbeispiel einer erfindungsgemäßen Vorrichtung zur Druckniveauüberwachung besteht aus einem Gehäuse 10 und einer an dem Gehäuse 10 ausgebildeten und in das Gehäuseinnere ragenden Schalteinheit 12, die an ihrem im Gehäuseinneren befindlichen Ende mit einer ersten Membran 14 verbunden ist. Die Verbindung der ersten Membran 14 mit dem Bolzen 13 wird über einen Stopfen 16 hergestellt, der in eine Bohrung 17 am entsprechenden Ende des Bolzens 13 ragt und dort verrastet ist. An dem aus einem Gehäuseoberteil 18 ragenden Ende des Bolzens 13 ist in eine weitere Bohrung 20 ein Stellelement 22 geschraubt. Mit einem das Stellelement 22 umlaufenden Kragen 24 können durch axiales Verschieben des Bolzens 13 und somit auch des Stellelements 22 zwei mit Abstand übereinander angeordnete Kontaktbleche 26 bewegt werden. Die beiden Kontaktbleche 26 können somit an den dem Stellelement 22 zugewandten Enden 28 aufeinandergedrückt werden und einen elektrischen Kontakt herstellen. Die beiden anderen Enden 30 der Kontaktbleche 26 dienen als elektrische Anschlüsse für zu schaltende elektrische Maschinen, beispielsweise Pumpen. Die Kontaktbleche 26 sind an einem Kontaktträger 32 angebracht, der einteilig mit dem Gehäuseoberteil 18 verbunden ist.

Der Bolzen 13 ist in einer zentralen Öffnung 34 des Gehäuseoberteils 18 axial verschiebbar geführt, wobei seine Verschiebung aus dem Gehäuse 10 heraus gegen die Kraft einer Feder 36 erfolgt. Die Feder 36 liegt mit ihrem einen Ende auf einer Fläche 38 im Inneren des Gehäuseoberteils 18 auf und mit ihrem anderen Ende auf einer Fläche 40 eines den Bolzen 13 umlaufenden Kragens 42.

Die erste Membran 14 trennt den gesamten Gehäuseinnennraum in einen mit einem Fluid unter Druck beaufschlagbaren ersten Gehäuseinnenraum 44 von einem hierzu drucklosen zweiten Gehäuseinnenraum 46, und ist mit ihrem äußeren Rand 48 zwischen das Gehäuseoberteil 18 und ein Gehäuseunterteil 50 geklemmt. Ein zentraler Bereich 52 der ersten Membran 14 wird von dem Stopfen 16 gehalten.

In das Gehäuseunterteil 50 ist ein Rückschlagventil 54 integriert, welches aus einer zweiten Membran 56 mit einer zentralen Öffnung 58 und ein die zweite Membran 56 fixierendes Haltemittel 60 besteht und mit mindestens einem Einlaßstutzen 62 sowie einem Auslaßstutzen 64 verbunden ist.

In Figur 2 ist der mit I bezeichnete Bereich aus Figur 1 vergrößert dargestellt, wobei für gleiche Teile gleiche Bezugszahlen verwendet werden. Alle über die Bezugszahl 64 hinausgehenden Bezugszahlen werden der Übersichtlichkeit halber nur in Figur 2 verwendet, und es wird im folgenden auf Figur 2 Bezug genommen.

Die zweite Membran 56 wird an ihrem Randbereich 66 auf einer Schulter 68 im Inneren des Gehäuseunterteils 50 durch das sich am Gehäuseunterteil 50 abstützende, damit verrastete Haltemittel 60 gehalten. In ihrem zentralen Bereich 70 liegt sie in nicht deformiertem Zustand auf einer Dichtfläche 72 auf, die an einem im Inneren des Gehäuseunterteils 50 gebildeten Dichtsitz 74 stirnseitig angeformt ist.

Die zweite Membran 56 ist so angeordnet, daß sie den mit einem Fluid unter Druck beaufschlagbaren ersten Gehäuseinnenraum 44 in drei verschiedene Teilräume 76, 78, 80 trennt.

Dabei wird der erste Teilraum 76 im wesentlichen durch die erste Membran 14 und die zweite Membran 56 begrenzt, der zweite Teilraum 78 durch die inneren Flächen einer den Einlaßstutzen 62 aufnehmenden Wand 79 und die Außenfläche des Dichtsitzes 74, sowie der dritte Teilraum 80 durch die Innenfläche des Dichtsitzes 74, die in Auslaßstutzen 64 übergeht.

Die Wirkungsweise der erfindungsgemäßen Vorrichtung zur Druckniveauüberwachung mit dem in das Gehäuseunterteil 50 integriertem Rückschlagventil erklärt sich anhand der beiden Figuren 1 und 2 wie folgt: Wenn der zweite Teilraum 78 über den Einlaßstutzen 62 mit Druck beaufschlagt wird, dann hebt sich der zentrale Bereich 70 der zweiten Membran 56, wodurch eine Verbindung zu dem dritten Teilraum 80 hergestellt wird. Außerdem besteht über die zentrale Öffnung 58 der zweiten Membran 56 eine Verbindung zu dem ersten Teilraum 76. Es kann sich somit ein weitgehend gleichmäßiger Druck in den drei Teilräumen 76, 78, 80 aufbauen, der bei eingeschalteter Pumpe kontinuierlich bis zu einem Wert p₁ ansteigt. Dieser Wert p₁ wird im wesentlichen von der Feder 36 und der Elastizität der ersten Membran 14 festgelegt, die sich wegen des sich aufbauenden Druckes deformiert und so den Bolzen 13 zusammen mit dem Stellelement 22 gegen die Kraft der Feder 36 in axialer Richtung aus dem Gehäuse 10 hinausbewegt. Damit wird der elektrische Kontakt der Kontaktbleche 26 beim Erreichen des Druckwertes p₁ geöffnet.

Ist an den Enden 30 der Kontaktbleche 26 die Pumpe angeschlossen, mit deren Hilfe der Druck in den drei Teilräumen 76, 78, 80 aufgebaut wird, dann wird diese Pumpe abgeschaltet und ein weiterer Druckaufbau mit p > p₁ verhindert.

Mit dem Ausschalten der Pumpe wird der zweite Teilraum 78 entlüftet bzw. drucklos geschaltet, und der zentrale Bereich 70 der vorgespannten zweiten Membran 56 legt sich spontan auf den Dichtsitz 72. Damit wird die Verbindung zwischen dem zweiten Teilraum 78 und dem dritten Teilraum 80 bei etwa annähernd dem Druckwert p₁ gesperrt, wobei der elektrische Kontakt nach wie vor geöffnet ist. Auf diese Weise wird ein weiterer Druckabfall mit p < p₁ in den beiden Teilräumen 76 und 80 über den zweiten Teilraum 78 verhindert, weil die klassische Funktion eines Rückschlagventils zur Wirkung kommt. Somit stellt sich im Idealfall ein zeitlich relativ konstanter Druck p₁ im ersten Teilraum 76 und im dritten Teilraum 80 ein, der unabhängig von dem durch die Belüftung bedingten Druckabfall auf Normaldruck im zweiten Teilraum 78 ist.

Wenn der Druck im ersten Teilraum 76 und dem damit verbundenen dritten Teilraum 80 abweichend vom Idealfall bedingt durch Leckagen oder auch durch angeschlossene Verbraucher auf einen Wert p < p₁ abfällt, dann ist damit auch eine Absenkung des Stellelementes 22 verbunden. Dieses Stellelement 22 kann so justiert werden, daß bei Erreichen eines bestimmten Druckwertes p₂ < p₁ die elektrischen Kontakte der Kontaktbleche 26 wieder geschlossen werden. Die Pumpe beginnt erneut den zweiten Teilraum 78 mit Druck zu beaufschlagen und der eben beschriebene Mechanismus beginnt von vorne. Auf diese Weise kann das Druckniveau in einem am Auslaßstutzen 64 angeschlossenen Verbraucher in einem vorgebbaren Druckintervall p₁ > p > p₂ konstant gehalten und überwacht werden.

In der Regel sorgt die dem System innewohnende Dynamik und Hysterese dafür, daß p₁ größer ist als p₂ bzw. sich die Kontaktbleche 26 nicht schon vor dem Absinken der zweiten Membran 56 auf den Dichtsitz 72 wieder schließen und somit die Pumpe 22 einschalten. Dies würde nämlich zu einer unerwünschten Taktung und einem nicht akzeptablen Regelverhalten führen. Es kann jedoch sinnvoll sein, daß mittels gezielter und elektronisch geregelter Nachlaufzeiten der Pumpe Drucküberhöhungen zugelassen werden, die das Druckintervall p₁ > p > p₂ vergrößern und dafür sorgen, daß die Kontaktbleche 26 entsprechend weit geöffnet werden. Diese Maßnahme schließt die unerwünschte Taktung vollkommen aus.

## Patentansprüche

1. Vorrichtung zur Druckniveauüberwachung mit einem Gehäuse (10), welches ein Gehäuseoberteil (18) und ein Gehäuseunterteil (50) aufweist, wobei das Gehäuse (10) mit mindestens einem Einlassstutzen (62) und mindestens einen Auslassstutzen (64) für ein Fluid versehen ist, sowie mit einer ersten Membran (14), die einen mit dem Fluid unter Druck beaufschlagbaren ersten Gehäuseinnenraum (44) von einem zweiten Gehäuseinnenraum (46) des Gehäuses (10) trennt, ferner mit einer an dem Gehäuse (10) ausgebildeten und in das Gehäuseinnere ragenden Schalteinheit (12) die mit der ersten Membran (14) verbunden ist wobei der mindestens eine Einlassstutzen (62) über ein in das Gehäuseunterteil (50) integriertes, mit dem ersten Gehäuseinnenraum (44) in Verbindung stehendem Rückschlagventil (54) mit dem mindestens einen Auslassstutzen (64) verbindbar ist, **dadurch gekennzeichnet, dass** das Rückschlagventil (54) eine zweite Membran (56) mit einer zentralen Öffnung (58) und ein die zweite Membran (56) fixierendes Haltemittel (60) aufweist.

2. Vorrichtung nach Anspruch 1, **dadurch gekennzeichnet, dass** das Rückschlagventil (54), den ersten Gehäuseinnenraum (44) in einen ersten Teilraum (76), einen zweiten Teilraum (78) und einen dritten Teilraum (80) trennt.

3. Vorrichtung nach Anspruch 2, **dadurch gekennzeichnet, dass** die zentrale Öffnung (58) der zweiten Membran (56) eine Verbindung zwischen dem ersten Teilraum (76) und dem dritten Teilraum (80) herstellt.

4. Vorrichtung nach Anspruch 2 oder 3, **dadurch gekennzeichnet, dass** der erste Teilraum (76) im Wesentlichen durch die erste Membran (14) sowie das Rückschlagventil (54) begrenzt ist.

5. Vorrichtung nach Anspruch 2 oder 3, **dadurch gekennzeichnet, dass** der zweite Teilraum (78) mit dem Einlassstutzen (62) verbunden ist.

6. Vorrichtung nach einem der Ansprüche 2 bis 5, **dadurch gekennzeichnet, dass** der dritte Teilraum (80) mit dem Auslassstutzen (64) verbunden ist.

7. Vorrichtung nach Anspruch 1, **dadurch gekennzeichnet, dass** die zweite Membran (56) des Rückschlagventils (54) durch ein Haltemittel (60) fixiert ist, welches sich am Gehäuse (10) abstützt.

8. Vorrichtung nach Anspruch 7, **dadurch gekennzeichnet, dass** die zweite Membran (56) des Rückschlagventils (54) an Ihrem Randbereich (66) durch das Haltemittel (60) auf einer Schulter (68) im Innern des Gehäuseunterteils (50) gehalten wird.

9. Vorrichtung nach Anspruch 1, **dadurch gekennzeichnet, dass** das Rückschlagventil (54) im Wesentlichen durch die zweite Membran (56) und einen Dichtsitz (74) gebildet wird.

10. Vorrichtung nach Anspruch 1, **dadurch gekennzeichnet,** das die zweite Membran (56) im nicht deformierten Zustand, in einem zentralen Bereich, auf einer Dichtfläche (72) aufliegt, die an einem Dichtsitz (74) ausgeformt ist.

11. Vorrichtung nach Anspruch 10, **dadurch gekennzeichnet, dass** der dritte Teilraum (80) über die zentrale Öffnung (58) der zweiten Membran (56) mit dem ersten Teilraum (76) ständig in Verbindung steht, mit dem zweiten Teilraum (78) jedoch nur bei von der Dichtfläche (72) des Dichtsitzes (74) abgehobener zweiter Membran (56).

## Claims

1. Device for pressure-level monitoring, with a housing (10) which has a housing upper part (18) and a housing lower part (50), the housing (10) being provided with at least one inlet nipple (62) and at least one outlet nipple (64) for a fluid, and with a first diaphragm (14) which separates a first housing inner space (44) capable of being acted upon by the fluid under pressure from a second housing inner space (46) of the housing (10), furthermore with a switching unit (12) which is formed on the housing (10) and projects into the housing interior and which is connected to the first diaphragm (14), the at least one inlet nipple (62) being connectable to the at least one outlet nipple (64) via a non-return valve (54) integrated into the housing lower part (50) and connected to the first housing inner space (44), **characterized in that** the non-return valve (54) has a second diaphragm (56) with a central orifice (58) and has a holding means (60) fixing the second diaphragm (56).

2. Device according to Claim 1, **characterized in that** the non-return valve (54) separates the first housing inner space (44) into a first subspace (76), a second subspace (78) and a third subspace (80).

3. Device according to Claim 2, **characterized in that** the central orifice (58) of the second diaphragm (56) makes a connection between the first subspace (76) and the third subspace (80).

4. Device according to Claim 2 or 3, **characterized in that** the first subspace (76) is delimited essentially by the first diaphragm (14) and the non-return valve (54).

5. Device according to Claim 2 or 3, **characterized in that** the second subspace (78) is connected to the inlet nipple (62).

6. Device according to one of Claims 2 to 5, **characterized in that** the third subspace (80) is connected to the outlet nipple (64).

7. Device according to Claim 1, **characterized in that** the second diaphragm (56) of the non-return valve (54) is fixed by a holding means (60) which is supported on the housing (10).

8. Device according to Claim 7, **characterized in that** the second diaphragm (56) of the non-return valve (54) is held at its edge region (66) by the holding means (60) on a shoulder (68) inside the housing lower part (50).

9. Device according to Claim 1, **characterized in that** the non-return valve (54) is formed essentially by the second diaphragm (56) and a sealing seat (74).

10. Device according to Claim 1, **characterized in that** the second diaphragm (56), in the non-deformed state, lies in a central region on a sealing surface (72) which is integrally formed on a sealing seat (74).

11. Device according to Claim 10, **characterized in that**, via the central orifice (58) of the second diaphragm (56), the third subspace (80) is connected constantly to the first subspace (76), but is connected to the second subspace (78) only when the second diaphragm (56) is lifted off from the sealing surface (72) of the sealing seat (74).

## Revendications

1. Dispositif de contrôle de niveau de pression comprenant un boîtier (10) formé d'une partie supérieure (18) et d'une partie inférieure (50), le boîtier (10) ayant au moins un ajutage d'entrée (62) et au moins un ajutage de sortie (64) pour un fluide, ainsi qu'une première membrane (14) séparant une première chambre (44) d'une seconde chambre (46) du boîtier (10), en étant exposée au fluide sous pression, ainsi qu'une unité de commutation (12) pénétrant dans le boîtier et prévue sur le boîtier (10), cette unité étant reliée à la première membrane, (14),
au moins un ajutage d'entrée (62) pouvant être relié au moins à un ajutage de sortie (64) par un clapet anti-retour (54) intégré à la partie inférieure (50) du boîtier et communiquant avec la première chambre (44),
**caractérisé en ce que**
le clapet anti-retour (54) comporte une seconde membrane (56) munie d'un orifice central (58) et un moyen de maintien (60) pour fixer la seconde membrane (56).

2. Dispositif selon la revendication 1,
**caractérisé en ce que**
le clapet anti-retour (54) sépare la première chambre (44) en une première chambre partielle (76), une seconde chambre partielle (78) et une troisième chambre partielle (80).

3. Dispositif selon la revendication 2,
**caractérisé en ce que**
l'orifice central (58) de la seconde membrane (56) relie la première chambre partielle (76) à la troisième chambre partielle (80).

4. Dispositif selon la revendication 2 ou 3,
**caractérisé en ce que**
la première chambre partielle (76) est délimitée principalement par la première membrane (14) et par le clapet anti-retour (54).

5. Dispositif selon la revendication 2 ou 3,
**caractérisé en ce que**
la seconde chambre partielle (78) est reliée à l'ajutage d'entrée (62).

6. Dispositif selon l'une des revendications 2 à 5,
**caractérisé en ce que**
la troisième chambre partielle (80) est reliée à l'ajutage de sortie (64).

7. Dispositif selon la revendication 1,
**caractérisé en ce que**
la seconde membrane (56) du clapet anti-retour (54) est fixée par un moyen de retenue (60) s'appuyant contre le boîtier (10).

8. Dispositif selon la revendication 7,
**caractérisé en ce que**
la seconde membrane (56) du clapet anti-retour (54) est tenue au niveau de son bord (66) par le moyen de retenue (60) contre un épaulement (68) à l'intérieur de la partie inférieure (50) du boîtier.

9. Dispositif selon la revendication 1,
**caractérisé en ce que**
le clapet anti-retour (54) est formé principalement par la seconde membrane (56) et un siège d'étanchéité (74).

10. Dispositif selon la revendication 1,
**caractérisé en ce que**
la seconde membrane (56) à l'état non déformé s'appuie par sa zone centrale contre une surface d'étanchéité (72) réalisée sur un siège d'étanchéité (74).

11. Dispositif selon la revendication 10,
**caractérisé en ce que**
la troisième chambre partielle (80) est reliée en permanence par l'orifice central (58) de la seconde membrane (56) avec la première chambre partielle (76) alors qu'elle n'est reliée à la seconde chambre partielle (78) que lorsque la seconde membrane (56) est soulevée de la surface d'étanchéité (72) du siège d'étanchéité (74).
